Europäisches Patentamt

European Patent Office

Office européen des brevets

(19)

(11) Veröffentlichungsnummer: **0 236 528**
**B1**

(12)

# EUROPÄISCHE PATENTSCHRIFT

(45) Veröffentlichungstag der Patentschrift:
**07.02.90**

(21) Anmeldenummer: **86103330.6**

(22) Anmeldetag: **12.03.86**

(51) Int. Cl.⁴: **H01R 13/50, H02G 3/04**

(54) Abdeckhaube für mehrpolige elektrische Verbinder.

(43) Veröffentlichungstag der Anmeldung:
**16.09.87 Patentblatt 87/38**

(45) Bekanntmachung des Hinweises auf die Patenterteilung:
**07.02.90 Patentblatt 90/6**

(84) Benannte Vertragsstaaten:
**CH DE FR GB IT LI**

(56) Entgegenhaltungen:
**DE-A- 2 934 953**
**FR-A- 2 335 076**
**US-A- 4 335 271**

(73) Patentinhaber: **C.A. Weidmüller GmbH & Co.,**
**Postfach 950 Paderborner Strasse 175,**
**D-4930 Detmold 14(DE)**

(72) Erfinder: **Dürkop, Willi, Geierweg 7, D-4930 Detmold(DE)**
Erfinder: **Schmode, Hartmut, Zehlendorfer Strasse 5,**
**D-4933 Blomberg(DE)**
Erfinder: **Strate, Klaus, Augustdorfer Strasse 43,**
**D-4930 Detmold(DE)**
Erfinder: **Hanning, Walter, Am Hang 4,**
**D-4901 Hiddenhausen(DE)**
Erfinder: **Steinkuhle, Ferdinand, Wiesenweg 8,**
**D-4790 Paderborn(DE)**

(74) Vertreter: **Loesenbeck, Karl-Otto, Dipl.-Ing. et al,**
**Jöllenbecker Strasse 164, D-4800 Bielefeld 1(DE)**

**Beschreibung**

Die vorliegende Erfindung betrifft eine Abdeckhaube für mehrpolige elektrische Verbinder, mit einer Öffnung in einer schmalen Haubenstirnseite und einer daran angrenzenden Öffnung in der Haubenoberseite zum wahlweisen Herausführen des Bündels der an den elektrischen Verbinder angeschlossenen Leiter, mit einem mit dem Öffnungsrandbereich verbindbaren, aus abtrennbaren Teilsegmenten gebildeten Verschlußstück für die Öffnungen und mit einer an dem Verschlußstück vorgesehenen Zugentlastung.

Gemäß einem älteren Vorschlag (EP-A 183 939, die unter Artikel 54(3) EPÜ fällt) ist das Verschlußstück für beide Öffnungen ein Sonderteil, das aus abtrennbaren Teilsegmenten aufgebaut ist und das wahlweise mit beiden Randbereichen der für die Herausführung des Leiterbündels nicht benötigten Öffnung in der Abdeckhaube formschlüssig verriegelt werden kann, wobei an das eine Ende dieses Verschlußstückes ein Zugentlastungsbügel angeformt ist. Dabei können abgetrennte Teilsegmente dazu benutzt werden, bei derjenigen Öffnung, aus der das Leiterbündel herausgeführt wird, hierfür nicht benötigte Teilbereiche zu verschließen. Es ergibt sich die Möglichkeit der wahlweisen Herausführung des Leiterbündels entweder aus der einen schmalen Stirnseite oder aus der Haubenoberseite heraus, mit einem stabilen Verschluß der nicht benötigten Öffnungsbereiche der Abdeckhaube und mit einer entsprechend stabilen Zugentlastung für das Leiterbündel, das an dem jeweils zweckgerichtet liegenden Zugentlastungsbügel des Verschlußstückes angebunden werden kann.

Der vorliegenden Erfindung liegt die Aufgabe zugrunde, eine Abdeckhaube der oben genannten Art zu schaffen, die in ihrer Herstellung, Bevorratung und bezüglich des Montageaufwandes noch weiter vereinfacht ist.

Die erfindungsgemäße Lösung besteht im wesentlichen darin, daß mit den Rändern auf der einen Seite der beiden Öffnungen der Abdeckhaube jeweils in der Größe entsprechende Verschlußstücke klappbar verbunden sind, die an dem gegenüberliegenden Öffnungsrand lösbar festsetzbar sind, wobei die Verschlußstücke in solche Teilsegmente entsprechend dem benötigten Durchtrittsquerschnitt für das Leiterbündel querzertrennbar sind, die noch klappbar mit dem einen Öffnungsrand verbunden bleiben und die Zugentlastung bilden.

Dank dieser Ausgestaltung bildet in herstellungstechnisch günstiger Weise die Abdeckhaube mit den beiden Verschlußstücken für die beiden Öffnungen ein beispielsweise im Spritzgußverfahren einfach herzustellendes einheitliches Spritzteil. Die separate Herstellung und Bevorratung gesonderter Verschlußstücke ist nicht mehr erforderlich und es besteht auch nicht mehr die Gefahr, daß etwa beim Anwender später derartige Verschlußstücke verlorengehen.

Weiterhin kommt ein speziell geformtes Zugentlastungsteil in Fortfall, da bei dieser Ausgestaltung die vom Verschlußstück im übrigen quer abgetrennten Teilsegmente den benötigten Durchtrittsquerschnitt für das Leiterbündel freigeben, unmittelbar als stabile Zugentlastung benutzt werden können, an die das Leiterbündel angebunden werden kann. Von Vorteil ist auch, daß die in der Abdeckhaube vorzusehenden Öffnungen nicht mehr in jedem Fall gleich lang sein müssen, wie dies zweckmäßig der Fall ist, wenn mit einem gesonderten, wahlweise in beide Öffnungen einzusetzenden Verschlußstück gearbeitet wird.

Die Montage ist für den Anwender einer derartigen Abdeckhaube außerordentlich vereinfacht. Die Abdeckhaube kann mit den mit ihr verbundenen Verschlußstücken in deren offener Stellung angeliefert werden. Der Anwender wählt die gewünschte Lage, d. h. Seite der Durchtrittsöffnung, wählt den benötigten Durchtrittsquerschnitt und trennt das entsprechend große Teilsegment von dem lagemäßig betroffenen Verbindungsstück ab, führt das Kabelbündel an diesem Teilsegmentstück vorbei und bindet es zur Zugentlastung daran an. Das Verbindungsstück der nicht benötigten Öffnung und die verbleibenden Teilsegmentstücke des zertrennten Verbindungsstückes werden um 90° umgeklappt und mit dem gegenüberliegenden Öffnungsrandbereich der Abdeckhaube verbunden.

Bevorzugte Ausgestaltungen sind in den Unteransprüchen gekennzeichnet. Diese Ausgestaltungen tragen zum einfachen Aufbau mit bei. Hervorzuheben ist insoweit die Anlenkung der Verbindungsstücke am Öffnungsrandbereich der Abdeckhaube mittels eines angeformten Filmscharnieres. Das lösbare Festsetzen der freien Kanten der Verbindungsstücke bzw. der Teilsegmente mit dem entsprechenden Öffnungsrand kann in Form einer geometrisch einfachen Rastverbindung geschehen. Das Zertrennen der Verbindungsstücke zur Bildung jeweils des erforderlichen Teilsegmentes kann durch die Bildung von auf die Klappachse zu verlaufenden Quertrennkerben erleichtert werden, so daß das Querzertrennen dann beispielsweise mit einem Messer erfolgen kann.

Ein Ausführungsbeispiel einer Abdeckhaube gemäß der Erfindung wird nachstehend unter Bezugnahme auf die Zeichnung beschrieben. Es zeigen

Figur 1 eine Abdeckhaube gemäß der Erfindung in perspektivischer Darstellung mit Verschluß der einen Öffnung durch das entsprechende Verschlußstück und teilweiser Öffnung der anderen Öffnung mit angedeutetem Durchtritt eines Leiterbündels,

Figure 2 eine Teilschnittdarstellung durch die Abdeckhaube nach Figur 1 mit Darstellung des Verschlußstückes in seiner Schließlage.

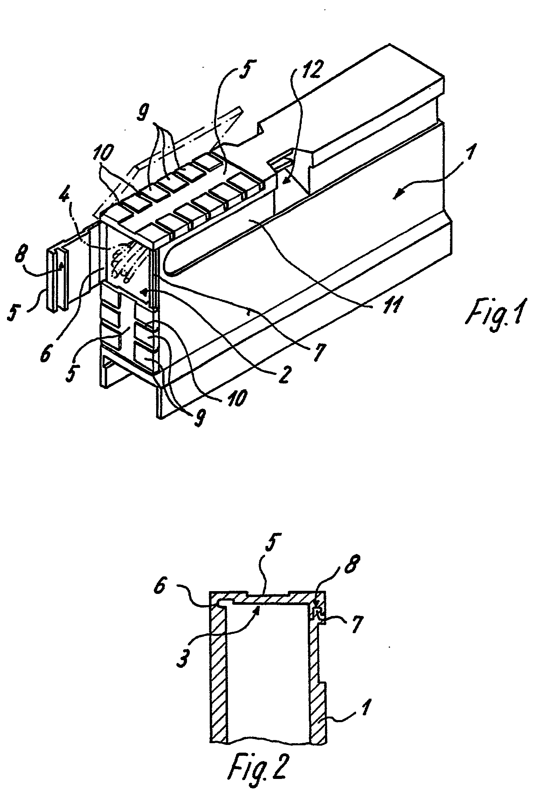

Die dargestellte Abdeckhaube 1 für mehrpolige elektrische Verbinder, die mit ihrem unteren entsprechend geformten Rastbereich beispielsweise auf eine Kontaktleiste eines derartigen mehrpoligen elektrischen Verbinders gesteckt werden kann, weist an ihrer einen schmalen Stirnseite eine Öffnung 2 auf und sie weist ferner eine in der Figur 1 geschlossene, aus Figur 2 ersichtliche an diese Öffnung 2 auf der schmalen Stirnseite über Eck angrenzende weitere Öffnung 3 in ihrer Oberseite auf, so daß im Prinzip das in Figur 1 strichpunktiert angedeutete Leiterbündel 4 der an den Steckverbinder angeschlossenen Leiter wahlweise je nach vorhandenem Platz vom Anwender aus der Stirnseite der Abdeckhaube 1 oder aus deren Oberseite herausgeführt werden kann.

Im dargestellten Ausführungsbeispiel sind die Öffnungen 2 und 3 praktisch gleich lang bemessen und von daher mit praktisch gleichen jeweils zugeordneten Verschlußstücken 5 verschließbar bzw. verschlossen. Hier ist hervorzuheben, daß bei dieser Ausgestaltung eine Bindung an gleich lange Öffnungen und damit an gleich große Verschlußstücke nicht besteht. Die Öffnungen 2 und 3 können vielmehr unterschiedlich lang sein. Dann sind auch die entsprechenden zugeordneten Verschlußstücke 5 unterschiedlich lang.

Die Verschlußstücke 5 sind nun an dem einen Randbereich der Öffnungen 2 und 3 der Abdeckhaube 1 klappbar verbunden, wozu in zweckmäßiger Ausgestaltung im dargestellten Ausführungsbeispiel die Verschlußstücke hier mittels eines Filmscharnieres 6 jeweils an dem Rand der Öffnungen 2, 3 über deren ganzer Länge angelenkt sind.

Um die Verschlußstücke nach Herumklappen um die von dem Filmscharnier 6 gebildete Achse auf dem anderen Rand der Öffnungen 2, 3 festsetzen zu können, ist an diesem gegenüberliegenden Randbereich der Öffnungen 2, 3 an der Abdeckhaube jeweils eine Rastrippe 7 angeformt und an dem entsprechenden freien Ende der Verschlußstücke 5 ist eine Rastnut 8 eingeformt, die auf der Rastrippe 7 aufgerastet werden kann, wie in Figur 2 illustriert.

Die Verschlußstücke 5 sind nun in Form von zusammenhängenden Teilsegmenten 9 aufgebaut, die so angeordnet sind, daß in einfacher Weise eine Querzerteilung der einzelnen Verschlußstücke 5, d. h. eine Auftrennung der Verschlußstücke in Richtung auf das Filmscharnier 6 zu, möglich ist. Im dargestellten Ausführungsbeispiel sind hierzu in den Verschlußstücken 5 auf die das Filmscharnier 6 zulaufende Quertrennkerben vorgesehen, die ein leichtes Querzertrennen beispielsweise mittels eines Messers ermöglichen.

Die so ausgestalteten Abdeckhauben können vom Hersteller mit offenstehenden Verschlußstücken 5 zum Anwender geliefert werden. Der Anwender wählt entsprechend dem benötigten Durchtrittsquerschnitt des Leiterbündels und entsprechend der gewünschten Herausführungsrichtung des Leiterbündels aus der Abdeckhaube 1 aus, welche der Öffnungen 2, 3 er in welcher definitiven Größe zur Herausführung des Leiterbündels 4 benötigt. Die nicht benötigte Öffnung wird durch Umklappen des zugeordneten Verschlußstückes 5 auf den gegenüberliegenden Rand mit entsprechender Verrastung der Rastnut 8 auf der Rastrippe 7 vollständig geschlossen. Von dem anderen Verschlußstück der anderen Öffnung werden so viele Teilsegmente 9 von dem betroffenen Schlußstück zusammenhängend quer abgetrennt, wie dem benötigten Durchtrittsquerschnitt für das Leiterbündel 4 entspricht. Die hiervon nicht betroffenen Teilsegmente 9 dieses Verschlußstückes 5 werden wieder zum Verschließen des nicht benötigten Bereiches dieser Öffnung benutzt, während die abgetrennten Teilsegmente, die ja über den entsprechenden Abschnitt des Filmscharnieres 6 weiterhin klappbar mit dem Rand der betroffenen Öffnung der Abdeckhaube 1 verbunden sind, in der Offenstellung verbleiben, so daß das Leiterbündel 4 hier aus der Abdeckhaube 1 herausgeführt werden kann, wobei dann diese in der Offenstellung verbleibenden Teilsegmente 9 des Verschlußstückes 5 als Zugentlastung dienen, also beispielsweise das Leiterbündel 4 im Sinne einer derartigen Zugentlastung daran angebunden werden kann.

Bei dieser Abdeckhaube sind zweckmäßig sich über deren Länge erstreckende beidseitige Einsenkungen 11 vorgesehen, die im Bereich der Öffnungen 2, 3 auf der einen Randseite die Ausbildung und Anformung des Filmscharnieres 6 erleichtern und auf der anderen Randseite die Ausbildung und Ausformung der Rastrippe 7 erleichtern und von denen ausgehend nach oben etwa im mittleren Bereich der Abdeckhaube 1 beidseitig Einschnürungen 12 verlaufen, die zusammen mit den Einsenkungen 11 einen ergonomischen günstigen Griffabschnitt für die Abdeckhaube 1 bilden.

## Patentansprüche

1. Abdeckhaube (1) für mehrpolige elektrische Verbinder, mit einer Öffnung (2) in einer schmalen Haubenstirnseite und einer daran angrenzenden Öffnung (3) in der Haubenoberseite zum wahlweisen Herausführen des Bündels (4) der an den elektrischen Verbinder angeschlossenen Leiter, und einem mit dem Randbereich der Öffnungen (2, 3) verbindbaren, aus Teilsegmenten gebildeten Verschlußstück (5) für die Öffnungen (2, 3) und einer an dem Verschlußstück (5) vorgesehenen Zugentlastung, wobei mit den Rändern auf der einen Seite der beiden Öffnungen (2, 3) jeweils in der Größe entsprechende Verschlußstücke (5) klappbar verbunden sind, die an dem gegenüberliegenden Rand der Öffnungen (2, 3) lösbar festsetzbar sind, und die Verschlußstücke (5) in solche Teilsegmente (9) entsprechend dem benötigten Durchtrittsquerschnitt für das Leiterbündel (4) quer zertrennbar sind, die noch klappbar mit dem Rand der betreffenden Öffnung verbunden bleiben und die im Bereich des Durchtrittes des Leiterbündels (4) die Zugentlastung bilden.

2. Abdeckhaube nach Anspruch 1, wobei die Verschlußstücke (5) mittels Filmscharnieren (6) klappbar an dem betroffenen Öffnungsrand der Abdeckhaube (1) angeformt sind.

3. Abdeckhaube nach Anspruch 1, wobei an den dem Filmscharnier (6) gegenüberliegenden Rändern der Öffnungen (2, 3) Rastrippen (7) angeformt sind, während am freien Rand der Verschlußstücke (5) dazu passende Rastnuten (8) angeformt sind.

4. Abdeckhaube nach Anspruch 1, wobei in den Verschlußstücken (5) auf die Klappachse zu verlaufende Quertrennkerben (10) gebildet sind.

**Claims**

1. A cover cap (1) for multi-pole electrical connectors having an opening (2) in a narrow end of the cap and an opening (3) adjoining same in the top side of the cap for selectively taking out the bunch (4) of leads connected to the electrical connector, and comprising a closure portion (5) for the openings (2, 3), which can be connected to the edge region of the openings (2, 3) and which is formed from segment portions, and a pull relief means provided on the closure portion (5), wherein pivotably connected to the edges on one side of the two openings (2, 3) are respective closure portions (5) which correspond in respect of size and which can be releasably secured to the oppositely disposed edges of the openings (2, 3), and the closure portions (5) can be transversely separated into such segment portions (9), corresponding to the required cross-section for the bunch (4) of leads to pass therethrough, which segments still remain pivotably connected to the edge of the respective opening and form the pull relief means in the region in which the bunch (4) of leads passes through.

2. A cover cap according to claim 1 wherein the closure portions (5) are pivotably formed on the respective edge of the opening in the cover cap (1) by means of film hinges (6).

3. A cover cap according to claim 1 wherein retaining ribs (7) are formed on the edges of the openings (2, 3) which are in opposite relationship to the film hinges (6) while formed at the free edge of the closure portions (5) are retaining grooves (8) which match same.

4. A cover cap according to claim 1 wherein formed in the closure portions (5) are transverse separating notches (10) which extend towards the axis of pivotal movement.

**Revendications**

1. Capot de recouvrement (1) pour connecteur électrique à pôles multiples, avec une ouverture (2) dans un côté frontal étroit du capot et une ouverture adjacente (3) dans le côté supérieur du capot pour sortir facultativement le faisceau (4) des fils conducteurs raccordés au connecteur électrique, et avec un élément d'obturation (5) pour les ouvertures (2, 3), pouvant être assemblé à la région de bord des ouvertures (2, 3) et constitué de segments partiels, et avec un moyen de décharge de traction prévu sur l'élément d'obturation (5), dans lequel des éléments d'obturation (5), de tailles respectives correspondantes, sont assemblés de manière rabattable avec les bords sur un côté des deux ouvertures (2, 3), éléments qui peuvent être fixés de manière amovible sur le bord opposé des ouvertures (2, 3), et les éléments d'obturation (5) peuvent être séparés transversalement en des segments partiels (9) en correspondance avec la section de passage nécessaire pour le faisceau de fils conducteurs (4), segments qui restent encore assemblés de manière rabattable avec le bord de l'ouverture concernée, et qui constituent le moyen de décharge de traction dans la région du passage du faisceau de fils conducteurs (4).

2. Capot de recouvrement selon la revendication 1, dans lequel les éléments d'obturation (5) sont formés de manière rabattable sur le bord d'ouverture concerné du capot de recouvrement (1) à l'aide de charnières pelliculaires (6).

3. Capot de recouvrement selon la revendication 1, dans lequel des nervures d'encliquetage (7) sont formées sur les bords des ouvertures (2, 3) opposés à la charnière pelliculaire (6), tandis que des rainures d'encliquetage correspondantes (8) sont formées sur le bord libre des éléments d'obturation (5).

4. Capot de recouvrement selon la revendication 1, dans lequel des entailles de séparation transversales (10), s'étendant vers l'axe de rabattement, sont formées dans les éléments d'obturation (5).

Fig.1

Fig.2